# EUROPÄISCHE PATENTSCHRIFT

(11) **EP 0 330 139 B1**
(45) Veröffentlichungstag und Bekanntmachung des Hinweises auf die Patenterteilung: **11.10.1995**
(21) Anmeldenummer: 89102986.0
(22) Anmeldetag: 21.02.1989
(51) Int. Cl.: C08G 18/42, C08G 18/62, C08G 18/80, C08G 18/08, B05D 7/16, C09D 175/04

(54) **Verwendung eines Beschichtungsmittels zur Herstellung von steinschlagfesten Überzügen und/oder Füllerschichten**
Use of a coating material for preparing coatings resistant against road chippings and/or layers of putty
Utilisation d'un matériau de revêtement pour préparer des revêtements anti-impacts et/ou des couches de mastic

(30) Priorität: 24.02.1988 DE 3805629
(43) Veröffentlichungstag der Anmeldung: 30.08.1989
(73) Patentinhaber: Herberts Gesellschaft mit beschränkter Haftung, 42285 Wuppertal (DE)
(72) Erfinder: Göldner, Wolfgang, Dr., D-5628 Heiligenhaus (DE); Doebler, Klaus Peter, D-5608 Radevormwald (DE)
(74) Vertreter: Türk, Gille, Hrabal, Leifert

(56) Entgegenhaltungen:
- FR-A- 2 393 822
- GB-A- 2 109 385

## Beschreibung

Die Erfindung betrifft die Verwendung von Beschichtungsmitteln zur Herstellung von steinschlagfesten Überzügen und/oder von Füllerschichten, wie beispielsweise steinschlagfesten Zwischenschichten und/oder Füllerschichten, insbesondere auf dem Kraftfahrzeugsektor.

Die Erzielung von steinschlagfesten Überzügen ist insbesondere auf dem Kraftfahrzeugsektor seit langem von großem Interesse. Bisher wurden einbrennbare Steinschlagschutzschichten auf der Basis lösemittelhaltiger Grundierungen erstellt. So wird in der DE-A-33 37 394 und in der DE-A-37 15 410 ein Steinschlagschutzschicht-Lack auf der Basis von Polyestern mit blockierten Isocyanaten beschrieben, der lackübliche Lösemittel enthält. Eine wäßrige, nicht einbrennbare Schrankenschicht gegen Steinschlag auf der Basis thermoplastischer Acrylharze ohne Isocyanatzusatz wird in der DE-A-36 31 619 beschrieben.

Es ist zwar bekannt, wasserverdünnbare Überzüge, wie Grundierungen und Füller, zu bereiten, jedoch wurden bisher keine wasserverdünnbaren Überzugsmittel bereitgestellt, die zur Herstellung von steinschlagfesten Filmen geeignet sind. So ist es beispielsweise üblich, wasserverdünnbare Grundierungen aus wasserverdünnbaren Harzen, wie Polyester, Polyacrylate und/oder entsprechenden Dispersionen und/oder Emulsionen mit geeigneten Vernetzern, vorzugsweise mit Wasser verdünnbaren Aminoplasten herzustellen. Wäßrige Dispersionen oder Emulsionen auf der Basis von Polyestern, Polyethern und Polyacrylaten und Vernetzern mit verkappten reaktionsfähigen Isocyanatgruppen werden beispielsweise in der DE-A-35 45 618 und der EP-A-0 140 323 beschrieben. Wäßrige Überzugsmittel auf der Basis von Carboxylgruppen enthaltenden Polyestern werden auch in der FR-A-2 393 822 beschrieben. Derartige Dispersionen werden beispielsweise als Basislacke für Zwei-Schicht-Überzüge verwendet. Grundsätzlich bekannt sind auch Bindemittelsysteme auf der Basis von Epoxid-Dispersionen mit wasserdispergierbaren blockierten Isocyanaten (GB-A-2 127 829). In der GB-A-2 109 385 wird die naß-in-naß-Lackierung beschrieben, nämlich die Überlackierung einer Metallic-Basislackschicht mit einer Klarlackschicht. Die naß-in-naß-Applikation von Metallic-Überzügen auf wäßrige Füllerschichten auf der Basis von Acrylharzen und blockierten Isocyanaten wird in der EP-A-0 238 037 beschrieben.

Die lösemittelhaltigen Systeme sind in den letzten Jahren einer heftigen Kritik ausgesetzt, da sie aufgrund des Lösemittelgehaltes zu Umweltproblemen führen. Aber auch die wäßrigen Systeme, die bisher zum Einsatz kamen, weisen schwerwiegende Nachteile auf. So ist es bekannt, daß eine der Hauptschwierigkeiten bei der Konzeption wäßriger, Isocyanat enthaltender Lacksysteme in der mangelnden Lagerstabilität besteht. Herkömmliche wasserverdünnbare Einbrennfüllersysteme haben in der Regel mechanische Nachteile bezüglich der Steinschlagfestigkeit und Zähelastizität gegenüber den lösemittelhaltigen Systemen und wurden daher nicht für Steinschlagschutzzwecke eingesetzt. Auch haben Lacksysteme auf der Basis wäßriger Polyurethandispersionen den Nachteil einer raschen Filmbildung, wodurch sie für die Verarbeitung in elektrostatischen Filmbildungssystemen, wie beispielsweise Hochrotationsglocken, schlecht geeignet sind. Es besteht die Gefahr von verschmutzten Werkzeugen. Auch eine naß-in-naß-Verarbeitung der bekannten wäßrigen Grundiersysteme mit den bekannten lösemittelhaltigen Steinschlagzwischengründen ist schlecht möglich, da Qualitätseinbußen hinsichtlich der Oberflächenbeschaffenheit in Kauf genommen werden müssen.

Angesichts der steigenden Nachfrage nach modernen, d.h. umweltfreundlichen Lacksystemen und dem gleichzeitig sich verstärkenden Druck des Gesetzgebers nach einer Emissionsminderung organischer flüchtiger Bestandteile in Lackierungssystemen, beispielsweise Automobil-Serienlackierungssystemen, besteht ein weiteres Bedürfnis nach wasserverdünnbaren Lacksystemen. Für den Bereich steinschlagfester Grundierungen ergibt sich hieraus die Aufgabe, ein Bindemittelsystem auf wäßriger Basis bereitzustellen, das den hohen Qualitätsanforderungen lösemittelhaltiger bekannter Bindemittelsysteme entspricht, die Nachteile bisheriger wäßriger Bindemittelsysteme nicht aufweist und eine hohe mechanische Belastbarkeit, bei problemloser Applikation auf elektrostatischen Lackieranlagen, beispielsweise Hochrotationsglocken, ergibt.

Erfindungsgemäß wird diese Aufgabe gelöst durch die einen Gegenstand der Erfindung bildende Verwendung eines Beschichtungsmittels auf der Basis von
A) 30 bis 60 Gew.-% eines oder mehrerer carboxylgruppenhaltiger Polyester oder (Meth)Acrylate und deren Copolymeren mit Vinylverbindungen, die bzw. deren Gemische eine mittlere Säurezahl von 30 - 100 mg KOH/g und eine mittlere OH-Zahl von 50 - 250 mg KOH/g, aufweisen und durch Neutralisation mit Stickstoffbasen wasserlöslich gemacht wurden,
B) 5 bis 25 Gew.-% eines wasserlöslichen oder wasserdispergierbaren blockierten Isocyanatprepolymeren und
C) 10 bis 30 Gew.-% Wasser
D) 10 bis 50 Gew.-% Pigmenten und/oder Füllstoffen und/oder lacküblichen Hilfs- und Zusatzstoffen,
zur Herstellung von steinschlagfesten Überzügen und/oder Füllerschichten.

Gemäß einer bevorzugten Ausführungsform ist die erfindungsgemäße Verwendung dadurch gekennzeichnet, daß die carboxylgruppenhaltige Komponente A) ein Gemisch, das teilweise Kondensat sein kann, aus einer wasserunlöslichen filmbildenden Polyhydroxylkomponente mit einer Säurezahl von unter 10 mg KOH/g und einer Hydroxylzahl von 50 - 650 mg KOH/g und einer filmbildenden Polycarboxylkomponente mit einer Säurezahl von 30 - 280 mg KOH/g in einem molaren Verhältnis von Carboxylgruppen zu Hydroxylgruppen von 1 : 1 bis 1 : 25, vorzugsweise 1 : 3 bis 1 : 10 ist.

Die Komponente A ist in dem erfindungsgemäß verwendeten Beschichtungsmittel bevorzugt in einer Menge von 35 - 45 Gewichtsprozent enthalten. Die Komponente B ist in dem erfindungsgemäß verwendeten Beschichtungsmittel bevorzugt in einer Menge von 12 - 17 Gewichtsprozent enthalten. Das Wasser, die Komponente C, ist in dem erfindungsgemäß verwendeten Beschichtungsmittel bevorzugt in einer Menge von 20 - 25 Gewichtsprozent enthalten. Die Komponente D ist in dem erfindungsgemäß verwendeten Beschichtungsmittel bevorzugt in einer Menge von 20 bis 25 Gew.-% enthalten.

Die erfindungsgemäß verwendete Überzugsschicht kann auf das gegebenenfalls grundierte Substrat aufgebracht werden und gegebenenfalls naß-in-naß mit einem wäßrigen Füller überschichtet werden, worauf die beiden naß-in-naß applizierten Überzüge ohne Zwischentrocknung gemeinsam eingebrannt werden können. Anschließend kann mit einem Decklack und gegebenenfalls einem Klarlack überzogen werden.

Das erfindungsgemäß verwendete Beschichtungsmittel weist eine Bindemittel-Komponente A auf der Basis von Polyestern und/oder (Meth)Acrylaten bzw. Copolymeren von (Meth)Acrylaten mit Vinylverbindungen auf. Wesentlich ist, daß diese Komponenten carboxylgruppenhaltig sind und eine mittlere Säurezahl von 30 - 100 mg KOH/g und eine mittlere OH-Zahl von 50 - 250 mg KOH/g aufweisen. Falls derartige Komponenten im Gemisch vorliegen, weist das Gemisch diese Säure- bzw. OH-Zahlen auf.

Die erfindungsgemäß verwendbare carboxylgruppenhaltige Komponente kann ein Polyester oder Poly(meth)acrylat bzw. Poly(meth)acrylatcopolymeres sein. Es handelt sich hierbei um Harze mit einem Aufbau, wie er auf dem Lacksektor üblich ist, wobei jedoch die vorstehenden Bedingungen für mittlere Säure- oder OH-Zahlen einzuhalten sind. Derartige Harze weisen bevorzugt ein Molekulargewicht von 2000 bis 5000 auf. Sie können durch Neutralisation mit Basen, insbesondere Stickstoffbasen, wasserlöslich gemacht werden.

Beispiele für Polyester sind solche auf der Basis von linearen Dialkoholen mit 2 bis 8 Kohlenstoffatomen und/oder verzweigten Polyalkoholen mit 3 bis 10 Kohlenstoffatomen, wie beispielsweise: Butandiol-1,4, Neopentylglykol, Tripropylenglykol, Glycerin, Ethylenglykol, 1,6-Hexandiol, und Pentaerythrit und deren Gemische. Als Carbonsäure-Komponente dienen aliphatische, cycloaliphatische oder aromatische Di- und Polycarbonsäuren (beispielsweise Tricarbonsäuren). Beispiele für derartige Säuren sind Sebacinsäure, Adipinsäure, Maleinsäure, Hexahydrophthalsäure, Phthalsäure, deren Isomere, wie Isophthalsäure und Terephthalsäure, Trimellithsäure und deren Gemische.

Als Polyacrylate bzw. Polymethacrylate kommen beispielsweise Mono- und Copolymere in frage, die aus folgenden Einzelkomponenten bestehen:
- α,β-ungesättigte Monocarbonsäuren wie Acrylsäure, Methacrylsäure
- α,β-ungesättigte Dicarbonsäuren oder deren Halbester, wie Malein- oder Fumarsäure bzw. deren Monoethylester
- α,β-ungesättigte Hydroxyalkyl(meth)acrylsäureester mit wenigstens einer primären und/oder sekundären Hydroxygruppe, wie Hydroxyethyl(meth)acrylat, Hydroxypropyl(meth)acrylat, 1,4-Butandiolmonoacrylat, 2,3-Dihydroxypropyl(meth)acrylat
- Vinylmonomere ohne weitere reaktive Gruppen, wie Styrol, Vinyltoluol, α-Methylstyrol sowie die Methyl-, Isopropyl-, Butyl-, Cyclohexyl- und Benzylester der (Meth)Acrylsäure
- Zur Steigerung des Hydroxylgruppengehaltes können die COOH-Gruppenhaltigen Copolymere mit Alkylenoxiden zur Reaktion gebracht werden, wie Ethylenoxid, Propylenoxid, Butylenoxid.

Beispielsweise können die in der DE-A-32 13 160 beschriebenen Acrylpolymerisate bzw. Acrylcopolymerisate verwendet werden.

Die Bindemittelkomponente A kann auch ein Gemisch aus Polyestern und/oder Poly(meth)acrylaten bzw. deren Copolymeren sein. Ein derartiges Gemisch kann so aufgebaut sein, daß die Einzelkomponenten unterschiedliche Carboxyl- und/oder Hydroxylzahlen aufweisen und das Gemisch die vorstehend spezifizierten Säure- und OH-Zahlen aufweist. Ein derartiges Gemisch kann teilweise kondensiert sein. Beispiele für solche Gemische, die erfindungsgemäß einsetzbar sind, werden in der AT-PS 328 587 beschrieben. Danach besteht die Bindemittelkomponente A aus einer wasserunlöslichen filmbildenden Polyhydroxylverbindung (Polyester und/ oder Poly(meth)acrylat bzw. -copolymerisat) mit einer Säurezahl von unter 10 mg KOH/g und einer Hydroxylzahl von 50 - 650 mg KOH/g und einer filmbildenden Polycarboxylverbindung (Polyester und/oder Poly(meth)acrylat bzw. - copolymerisat) mit einer Säurezahl von 30 - 280 mg KOH/g in einem molaren Verhältnis von Carboxylgruppen zu Hydroxylgruppen von 1 : 1 bis 1 : 25, vorzugsweise 1 : 3 bis 1 : 10, wobei dieses Gemisch partiell kondensiert sein kann.

In der vorstehend beschriebenen bevorzugten Ausführungsform kann die Polyhydroxylverbindung leicht in üblicher Weise durch Kondensation von Polyolen im Überschuß, wie Monoethylenglykol, Diethylenglykol, Triethylenglykol, Glycerin, Trimethylolpropan, Pentaerythrit, mit Di- bzw. Polycarbonsäuren oder deren Anhydriden, wie Phthalsäure, Terephthalsäure, Trimellithsäure, Bernsteinsäure, Addipinsäure, Sebacinsäure, gegebenenfalls unter anteiliger Mitverwendung von Monocarbonäuren mit 5 bis 20 Kohlenstoffatomen, hergestellt werden. Sie können auch durch Copolymerisation von (Meth)Acrylaten, die freie Hydroxylgruppen tragen, wie Ethylenglykolmonomethacrylsäureester, mit anderen copolymerisationsfähigen Vinylverbindungen, wie Estern der Acryl- bzw. Methacrylsäure von einwertigen Alkoholen, Amiden der Acryl- bzw. Methacrylsäure, Styrol, Vinyltoluol und anderen Monomeren, soweit sie keine Carboxylgruppen tragen, hergestellt werden.

Die in dem Gemisch bzw. partiell kondensierten Gemisch enthaltene filmbildende Polycarboxylverbindung weist eine Säurezahl von 30 bis 280 mg KOH/g auf und ist beispielsweise erhältlich durch Umsetzung hydroxylreicher Präkondensate mit Di- oder Tricarbonsäureanhydriden, z.B. aus hydroxylreichen Polyestern mit Phthalsäureanhydrid oder Trimellithsäureanhydrid. Bevorzugt sind die Additionsprodukte von dienophilen Verbindungen, z.B. Maleinsäureanhydrid an ungesättigte Verbindungen mit Molekulargewichten von über 500. Dazu zählen die Ester natürlicher ungesättigter Fettsäuren und Harzsäuren mit Polyalkoholen, z.B. Glycerin, Pentaerythrit oder mit Epoxidgruppen tragenden Verbindungen, wie Bisphenol-A-Glycidylethern. Geeignet sind auch die Copolymerisate der Acrylsäure bzw. Methacrylsäure mit anderen α,β-ethylenisch ungesättigten Monomeren, wie (Meth)Acrylsäureestern, Styrol, Vinyltoluol, geeignet.

Die für die Vernetzung des erfindungsgemäß verwendeten Bindemittels einzusetzenden Isocyanate (Komponente B) können aliphatischer, cycloaliphatischer oder aromatischer Natur sein. Als besonders geeignet haben sich trimeres Hexamethylendiisocyanat (Biuret- oder Isocyanurat-Form) und 3-Isocyanatomethyl-3,5,5-trimethylcyclohexylisocyanat (Isophorondiisocyanat) erwiesen. Die als Blockierungsmittel zur Herstellung verkappter Isocyanate geeigneten Substanzen sind beispielsweise in Houben-Weyl, Band 14/2, Teil 2, 4. Auflage, 1963, Seiten 61 - 70 beschrieben. Bevorzugt werden Lactame (z.B. ε-Caprolactam), β-Diketone, wie Acetessigester oder Acetylaceton. Besonders bevorzugt sind Oxime wie Butanonoxim. Diese Substanzklassen können auch im Hinblick auf die unterschiedlichen Entkappungstemperaturen (unterschiedlichen gewünschten Einbrenntemperaturen) gewählt werden.

Die erfindungsgemäß verwendeten Beschichtungsmittel können in üblicher Weise hergestellt werden, beispielsweise über die Erstellung einer Pigmentpaste, die bereits etwa 50 - 60 Gew.-% des Bindemittels (Komponente A) enthält, das anschließende Komplettieren mit weiterem Bindemittel und Härter (Komponente B) und Verdünnen mit Wasser (z:B. voll entsalzt) auf die gewünschte Auftragsviskosität. Die Auftragsviskosität liegt nach DIN 53211 im 4mm-Auslaufbecher bevorzugt zwischen 18 und 40 s, besonders bevorzugt zwischen 23 und 30 s.

Die Überzugsmittel können jedoch auch auf andere Weise hergestellt werden, beispielsweise können die Bindemittelkomponente A und die Härterkomponente B gemischt werden. Ein Teil dieses Gemisches wird mit der Pigmentpaste verarbeitet, worauf der Rest des Gemisches Komponente A + B zugesetzt und anschließend mit Wasser auf den gewünschten Verdünnungsgrad verdünnt wird.

Bevorzugt wird das erfindungsgemäß verwendete Überzugsmittel so hergestellt, daß das Verhältnis der OH/NCO-Äquivalente von Bindemittelkomponente A/Härterkomponente B, bei 1 : 0,5 bis 1 : 1,5 beträgt. Das Verhältnis Komponente D (Pigment, Füllstoffe etc.)/ Bindemittelkomponente A liegt bevorzugt bei 0,5 : 1 bis 2 : 1, bezogen auf das Gewicht.

Das erfindungsgemäß verwendete Überzugsmittel weist den Vorteil auf, daß die Bindemittelkomponente A in Wasser verdünnbar bzw. löslich ist. Diese Löslichkeit wird durch Neutralisation mit Base erzielt. Derartige Basen sind übliche Stickstoffbasen, wie beispielsweise Ammoniak, aliphatische Amine oder aliphatische Alkanolamine, z.B. Diethylamin, Triethylamin, N, N-Dimethylethanolamin und Diethanolamin. Durch den Aufbau der erfindungsgemäß eingesetzten Überzugsmittel ist es möglich, ohne Zusatz von Additiven mit emulgierender oder harzstabilisierender Wirkung zu arbeiten.

Die erfindungsgemäß verwendeten Überzugsmittel enthalten als Komponente D lackübliche Pigmente und/oder Füllstoffe und/oder Hilfs- und Zusatzstoffe. Beispiele für Pigmente sind Titandioxid, Ruß, Talkum und Bariumsulfat.

Die erfindungsgemäße Verwendung ist zur Herstellung von Steinschlagschutzschichten, insbesondere als steinschlagfeste Zwischengründe geeignet. Hierzu können die Überzugsmittel durch Rakeln, Tauchen, Spritzauftrag wie Druckluft- und Airless-Spritzen, sowie durch elektrostatischen Auftrag, beispielsweise Hochrotationsglockenauftrag, aufgetragen werden. Die Schichtdicke kann als Zwischengrund beispielsweise bei 8 bis 30 µm liegen. Wird die Steinschlagschutzschicht als separate Grundierung aufgetragen, so kann die Schichtdicke beispielsweise 20 bis 80 µm betragen.

Ein Vorteil der erfindungsgemäß verwendeten Überzugsmittel liegt darin, daß ohne Zwischentrocknung eine wässrige Füllerschicht naß-in-naß aufgetragen werden kann. Als naß-in-naß zu applizierende Füller kommen übliche Füllermaterialien auf Wasserbasis infrage. Geeignete übliche Materialien sind solche auf Alkyd/Melaminharz-Basis.

Der naß-in-naß Auftrag kann ohne Zwischentrocknung erfolgen. Es hat sich gezeigt, daß im Gegensatz zum bisherigen naß-in-naß Auftrag von wässrig/Lösemittelhaltigen Systemen die Oberflächenqualität hierdurch nicht beeinträchtigt wird. Bei überlackierung mit einem Füller kann die gemeinsame Schichtstärke so gewählt werden, daß insgesamt die Füllersollschichtstärke (beispielsweise von 30 bis 40 µm) erzielt wird. Es ergibt sich durch den gemeinsamen Auftrag ein wesentlich besserer Steinschlagschutz des Lackaufbaues als bei alleinigem Füllerauftrag. Die Steinschlagschutzschicht und Füllerschutzschicht werden gemeinsam eingebrannt. Die Trocknungsbedingungen der Steinschlagschutzschicht gegebenenfalls gemeinsam mit der Füllerschicht hängen von der Natur des gewählten Verkappungsmittels der Komponente B ab. Im allgemeinen liegen die Temperaturen bei 120 bis 200°C. Bevorzugt ist eine Temperaturkonstanz während 10 bis 30 Minuten. Der bevorzugte Einbrennbereich liegt bei etwa 155 bis 170°C während etwa 20 Minuten.

Die erfindungsgemäße Verwendung ist somit beispielsweise bei der Lackierung von Kraftfahrzeugen geeignet, beispielsweise können die Überzugsmittel zwischen handelsüblichen Elektrotauchlacken und wasserverdünnbaren Füllern verwendet werden. Sie können direkt auf das Metallsubstrat oder aber auf das mit üblichen Grundierungsmitteln vorgrundierte Metallsubstrat aufgebracht werden. Die erhaltene Steinschlagschutzschicht, die gegebenenfalls mit einer Füllerschicht bedeckt ist, kann nach dem Einbrennen mit üblichen Decklacken überlackiert werden.

Durch die erfindungsgemäße Verwendung ergeben sich somit im Hinblick auf den bisherigen Einsatz von lösemittelhaltigen Steinschlagschutzschichten verschiedene Vorteile. Die aufgebrachten Überzugsschichten können naß-in-naß mit einem Hydrofüller überlackiert werden. Sie ergeben bereits in dünner Schicht eine hohe Steinschlagfestigkeit. Dabei werden störungsfreie Oberflächen erzielt, die keine Kraterbildung, keine Kochblasen und keine unerwünschten Strukturen aufweisen. Die Überzugsmittel haften ausgezeichnet auf metallischen Untergründen, sowie auf üblichen Elektrotauchlacken. Der Verbund zu Hydrofüller und üblichen Decklacksystemen ist ausgezeichnet.

Die folgenden Beispiele erläutern die Erfindung.

### Beispiel 1

34,30 g eines im Handel erhältlichen gesättigten, ölfreien Polyesters, im wesentlichen bestehend aus Terephthalsäure, Isophthalsäure, Ethylenglykol und 1,6-Hexandiol (75%ig in Butyldiglykol) mit einer Säurezahl von ca. 35 mg KOH/g und einer OH-Zahl von ca. 50 mg KOH/g wird zunächst mit 7,3 g Butanonoxim- oder Caprolactam-verkapptem Isocyanat vom Typ Hexamethylendiisocyanat (80%ig in Butylglykol, latenter NCO-Gehalt: 10,7 %), 1,2 g N,N' -Dimethylethanolamin und 57,2 g vollentsalztes Wasser sowie im Bedarfsfall unter Zugabe handelsüblicher Additive mit entschäumender Wirkung homogenisiert. Die Scherbeanspruchung unter einem Laborrührer (Scheibenrührer) sollte etwa 30 Min. bei 5000 - 6000 UPM betragen.

Anschließend werden 22,00 g dieser Mischung (31,6%ig) mit 0,05 g Ruß, 1,75 g Talkum, 11,80 g BaSO₄, 9,90 g TiO₂ sowie 3,30 g vollentsalztes Wasser in einer Perlmühle über 40 Min. bei 40 - 50°C dispergiert und die so erhaltene Paste mit 51,20 g der Bindemittelmischung sowie im Bedarfsfall handelsüblichen Additiven mit untergrundbenetzenden Eigenschaften komplettiert. Zur Spritzapplikation wird mit weiterem vollentsalztem Wasser verdünnt. Der dabei erreichte Festkörper liegt bei ca. 45 %. Die Homogenität der Bindemittelmischung ist über mehr als drei Monate gewährleistet.

### Beispiel 2

Das Harz in Beispiel 1 wird ausgetauscht gegen einen ebenfalls im Handel erhältlichen gesättigten, ölfreien Polyester aus Phthalsäureanhydrid, Pentaerythrit, Trimethylolpropan und Glycerin (55%ig in vollentsalztem Wasser/Butanol) bei einer Säurezahl von ca. 45 mg KOH/g und einer OH-Zahl von ca. 95 - 100 mg KOH/g, Mn → 3000.

Dieses Harz wird gemäß Beispiel 1 zunächst zu einem Bindemittelsystem und, wiederum nach der in Beispiel 1 beschriebenen Methode zu einem pigmentierten Lacksystem verarbeitet. Es wird in Auftragsviskosität ein Festkörper von 46 % erreicht.
Die Homogenität des Bindemittelsystems ist über mehr als drei Monate gegeben.

### Beispiel 3

30,0 g eines fettsäurehaltigen, nach der AT-PS 328 587 aufbereiteten Harzes (40%ig in Wasser/org. Solventien wie 14/1) mit einer mittleren Säurezahl von 35 - 45 mg KOH/g und einer OH-Zahl von 180 - 190 mg KOH/g werden mit 26,6 g der in Beispiel 1 aufgeführten Füllstoffmischung und 5,7 g vollentsalztem Wasser 40 Min. bei 40 - 50°C auf der Perlmühle angerieben, gegebenenfalls unter Zugabe von 0,5 g handelsüblicher Entschäumer.

Anschließend wird mit 11,3 g des gleichen Harzes, 8,5 g des in Beispiel 1 beschriebenen Isocyanats, 0,4 g tertiärem Amin und 17,0 g vollentsalztem Wasser komplettiert. Durch weitere Zugabe von ca. 4,0 g vollentsalztem Wasser läßt sich ein spritzfertiger Lack mit einem Festkörper von 49 % erhalten. Zur besseren Untergrundbenetzung können dem fertigen Lack entsprechende Additive zugefügt werden.

### Beispiel 4

### Hydrofüller:

34,6 g eines fettsäurehaltigen, nach der AT-PS 328 587 hergestellten Harzes (40%ig in Wasser/org. Lösemitteln) mit einer mittleren Säurezahl von 35 - 45 mg KOH/g und einer OH-Zahl von ca. 100 - 115 mg KOH/g werden mit 0,1 g Ruß, 2,1 g Talkum, 13,7 g BaSo₄, 11,9 g TiO₂, 6,2 g vollentsalztes Wasser, sowie 1,0 g handelsüblicher Entschäumer 40 Min. bei 40 - 50°C dispergiert (PM1 der Fa. Drais).

Anschließend wird mit 21,2 g des gleichen Harzes, 5,6 g eines im Handel erhältlichen 98%igen Melaminharzes, 0,2 g eines Netzmittels sowie 1,9 g vollentsalztes Wasser komplettiert. Die Einstellung des Lackes auf Verarbeitungsviskosität erfolgt mit vollentsalztem Wasser.

### Geprüfte Aufbauten:

1. (Standard) : Untergrund: üblicher Elektrotauchlack für Autoserienlackierung Füller: konventioneller Alkyd-Melamin-Füller auf Basis organischer Lösemittel Decklack Alkyd-Melamin-Seriendecklack, weiß
2. : Untergrund und Decklack wie Standard, Hydrofüller wie Beispiel 4; ohne Steinschlagschutz-Zwischengrund
3. : Untergrund und Decklack wie Standard, wäßriger Steinschlagschutz-Zwischengrund wie Beispiel 3 und Hydrofüller naß-in-naß aufgetragen mit einer Gesamttrockenschichtdicke von 35 - 40 µm
4. : Untergrund und Decklack wie Standard, wäßriger Steinschlagschutz-Zwischengrund wie Beispiel 3 als Füller

### Einbrenntemperaturen

| | |
|---|---|
| KTL | 30 Min. 180°C (KTL = Elektrotauchlack) |
| Füller und HSZG | 20 Min. 160°C (HSZG = Steinschlagschutz-Zwischengrund) |
| Decklack | 30 Min. 130°C |

### Technologische Vergleichsprüfungen

| Aufbau | ET(mm) | GT(2MM) DIN 53151 | ET-Schicht (µm) | Decklack-Schicht (µm) | Füller-Schicht (µm) | Pendelhärte (s) n.König |
|---|---|---|---|---|---|---|
| 1 | 5,6 | 0-1 | 20 | 39 | 34 | 129 |
| 2 | 4,5 | 1 | 21 | 42 | 36 | 83 |
| 3 | 6,0 | 0-1 | 21 | 42 | 35 | 86 |
| 4 | 6,4 | 0-1 | 20 | 43 | 34 | 72 |
| ET = Erichsentiefung GT = Gitterschnitt | | | | | | |

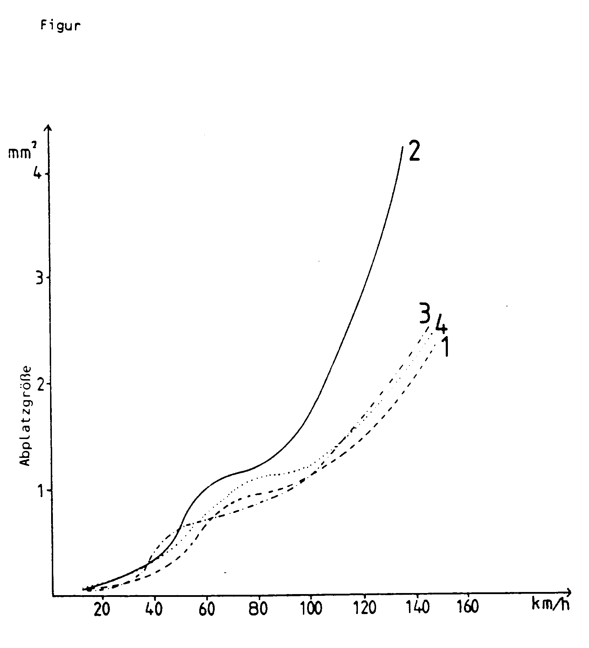

Die Ergebnisse des Steinschlag-Tests sind in der beigefügten Figur aufgeführt. Die Tests wurden mit einem Steinschlagsimulationsgerät gemäß "Farbe und Lack", 8/1984, Seiten 646-653, durchgeführt. Die Figure zeigt die Abplatzgröße (in mm²); das Geschwindigkeitsprofil wurde zwischen 20 und 150 km/h (mit 120° Kegelstumpf, 0,5 g unter einem Winkel von 60° bei 21°C) aufgenommen.

## Patentansprüche

1. Verwendung eines Beschichtungsmittels auf der Basis von
A) 30 bis 60 Gew.-% eines oder mehrerer carboxylgruppenhaltiger Polyester oder (Meth)Acrylate und deren Copolymeren mit Vinylverbindungen, die bzw. deren Gemische eine mittlere Säurezahl von 30 - 100 mg KOH/g und eine mittlere OH-Zahl von 50 - 250 mg KOH/g, aufweisen und durch Neutralisation mit Stickstoffbasen wasserlöslich gemacht wurden,
B) 5 bis 25 Gew.-% eines wasserlöslichen oder wasserdispergierbaren blockierten Isocyanatprepolymeren und
C) 10 bis 30 Gew.-% Wasser
D) 10 bis 50 Gew.-% Pigmenten und/oder Füllstoffen und/oder lacküblichen Hilfs- und Zusatzstoffen,
zur Herstellung von steinschlagfesten Überzügen und/oder Füllerschichten.

2. Verwendung nach Anspruch 1, dadurch gekennzeichnet, daß die carboxylgruppenhaltige Komponente A) ein Gemisch, das teilweise Kondensat sein kann, aus einer wasserunlöslichen filmbildenden Polyhydroxylkomponente mit einer Säurezahl von unter 10 mg KOH/g und einer Hydroxylzahl von 50 - 650 mg KOH/g und einer filmbildenden Polycarboxylkomponente mit einer Säurezahl von 30 - 280 mg KOH/g in einem molaren Verhältnis von Carboxylgruppen zu Hydroxylgruppen von 1 : 1 bis 1 : 25 ist.

## Claims

1. Use of a coating composition based on
A) 30 to 60 wt.% of one or more polyesters or (meth)acrylates containing carboxyl groups and the copolymers thereof with vinyl compounds, which, or the mixtures thereof, have an average acid value of 30 to 100 mg KOH/g and an average OH value of 50 to 250 mg KOH/g and were rendered water-soluble by neutralisation with nitrogenous bases,
B) 5 to 25 wt.% of a water-soluble or water-dispersible blocked isocyanate prepolymer and
C) 10 to 30 wt.% of water
D) 10 to 50 wt.% of pigments and/or extenders and/or conventional lacquer auxiliary substances and additives,
for the production of coatings and/or surfacer layers resistant to stone impact.

2. Use according to claim 1, characterised in that component A), which contains carboxyl groups, is a mixture, which may in part be a condensation product, prepared from a film-forming polyhydroxyl component insoluble in water with an acid value of below 10 mg KOH/g and a hydroxyl value of 50 to 650 mg KOH/g and a film-forming polycarboxyl component with an acid value of 30 to 280 mg KOH/g in a molar ratio of carboxyl groups to hydroxyl groups of 1:1 to 1:25.

## Revendications

1. Utilisation d'un produit de revêtement à base de
A) 30 à 60 % en poids d'un ou plusieurs polyesters ou (méth)acrylates contenant des groupes carboxyle et leurs copolymères avec des dérivés vinyliques, ce composant ou ce mélange de composant ayant un indice d'acide moyen de 30 à 100 mg de KOH/g et un indice d'OH moyen ce 50 à 250 mg de KOH/g et ayant été rendu soluble dans l'eau par neutralisation à l'aide de bases azotées,
B) 5 à 25 % en poids d'un prépolymère d'isocyanate bloqué soluble ou dispersable dans l'eau, et
C) 10 à 30 % en poids d'eau,
D) 10 à 50 % en poids de pigments et/ou de matières de charges et/ou de produits auxiliaires et additifs usuels dans l'industrie des peintures et vernis, pour l'application de revêtements et/ou de couches de mastic résistant aux jets de pierres.

2. Utilisation selon revendication 1, caractérisée en ce que le composant contenant des groupes carboxyle A) est un mélange, qui peut consister en partie en un condensat, d'un composant polyhydroxylé filmogène insoluble dans l'eau, d'indice d'acide inférieur à 10 mg de KOH/g et d'indice d'hydroxyle 50 à 650 mg de KOH/g, et d'un composant polycarboxylique filmogène d'indice d'acide 30 à 280 mg de KOH/g, à un rapport molaire de 1:1 à 1:25 entre les groupes carboxyle et les groupes hydroxy.
